# EUROPEAN PATENT APPLICATION

(11) **EP 4 841 794 A1**
(43) Date of publication of application: **18.11.2026**
(21) Application number: 26174363.7
(22) Date of filing: 24.04.2026
(51) Int. Cl.: H01M 50/483, H01M 4/131, H01M 10/04, H01M 50/103, H01M 50/242, H01M 50/474, H01M 50/489

(54) **RECHARGEABLE BATTERY, RECHARGEABLE BATTERY MODULE INCLUDING THE SAME, RECHARGEABLE BATTERY PACK INCLUDING THE SAME, AND VEHICLE INCLUDING THE SAME**

(30) Priority: 16.05.2025 KR 20250064129
(71) Applicant: SAMSUNG SDI CO., LTD., Yongin-si, Gyeonggi-do 17084 (KR)
(72) Inventor: Bae, Subin, 17084 Yongin-si, Gyeonggi-do (KR); Kim, Sanghun, 17084 Yongin-si, Gyeonggi-do (KR); Han, Dongyun, 17084 Yongin-si, Gyeonggi-do (KR); Kim, Hyunkyu, 17084 Yongin-si, Gyeonggi-do (KR); Jo, Beopgwan, 17084 Yongin-si, Gyeonggi-do (KR); Kim, Yeongmin, 17084 Yongin-si, Gyeonggi-do (KR); Oh, Jeongyeon, 17084 Yongin-si, Gyeonggi-do (KR)
(74) Representative: Meissner Bolte Partnerschaft mbB

(57) **Abstract**

A rechargeable battery (100, 101, 102, 200) includes an electrode assembly (110, 210), a case (110, 210) accommodating the electrode assembly (110, 210), the case (110, 210) having one open surface, a cap plate (115) coupled to the one open surface of the case (110, 210), and a buffer layer (150, 250) on an interior surface of the case (110, 210), the buffer layer (150, 250) including a silicone rubber material.

## Description

### BACKGROUND

### 1. Field

The present invention relates to a rechargeable battery, a rechargeable battery module including the same, a rechargeable battery pack including the same, and a vehicle including the same.

### 2. Description of the Related Art

A rechargeable battery is a battery that repeatedly performs charging and discharging, unlike a primary battery. Small-capacity rechargeable batteries are used in portable small electronic devices such as mobile phones, laptop computers, and camcorders, and large-capacity rechargeable batteries may be used as power sources for driving motors in hybrid vehicles and electric vehicles.

Rechargeable batteries may be classified into prismatic, cylindrical, and pouch types according to their shapes. Prismatic or cylindrical rechargeable batteries may be manufactured by inserting an electrode assembly having a negative electrode plate, a positive electrode plate, and a separator into an internal space of a can and then sealing the can. A pouch-type battery may be manufactured by wrapping an electrode assembly with aluminum foil coated with an insulator.

### SUMMARY

A rechargeable battery according to the present invention includes an electrode assembly, a case accommodating the electrode assembly and having one surface opened, a cap plate coupled to the opened surface of the case, and a buffer layer positioned inside the case and including a silicone rubber material.

In an embodiment, the buffer layer may be disposed between the case and the electrode assembly.

In an embodiment, the buffer layer may cover at least a part of an inner surface of the case.

In an embodiment, the case includes a bottom surface facing the cap plate and side portions connected to the bottom surface, and the side portions may include a pair of long side portions connected to long sides of the bottom surface and a pair of short side portions connected to short sides of the bottom surface.

In an embodiment, the buffer layer may be positioned on the long side portions.

In an embodiment, the buffer layer may be positioned on the short side portions.

In an embodiment, the buffer layer may be positioned on the bottom surface.

In an embodiment, the buffer layer may be positioned on the entire side portions of the case.

In an embodiment, the buffer layer may be positioned on the entire side portions and the bottom surface of the case.

In an embodiment, the buffer layer may be a polymer composed of siloxane bonds.

In an embodiment, the case may include aluminum.

In an embodiment, the thickness of the buffer layer may be about 10mm or less.

In an embodiment, the thickness of the buffer layer may be about 8mm or less.

In an embodiment, the decomposition temperature of the buffer layer may be about 200°C or higher.

In an embodiment, the decomposition temperature of the buffer layer may be about 250°C or higher.

A rechargeable battery module according to the present invention may include a rechargeable battery according to an embodiment.

A rechargeable battery pack according to the present invention may include a rechargeable battery according to an embodiment.

A vehicle according to the present invention may include a rechargeable battery according to an embodiment.

Embodiments of the present invention include a buffer layer containing a silicone rubber material inside the case, thus delaying heat transfer and preventing thermal runaway of the rechargeable battery.

In addition, the buffer layer may absorb external impact to improve stability of the rechargeable battery.

### BRIEF DESCRIPTION OF THE DRAWINGS

Features will become apparent to those of skill in the art by describing in detail exemplary embodiments with reference to the attached drawings in which:
FIG. 1 is a perspective view schematically showing a rechargeable battery according to an embodiment.
FIG. 2 is a cross-sectional view taken along line II-II' of FIG. 1.
FIG. 3 is a cross-sectional view taken along line III-III' of FIG. 1.
FIG. 4 is a view corresponding to a cross-section along line II-II' of FIG. 1.
FIG. 5 is a view corresponding to a cross-section along line III-III' of FIG. 1.
FIG. 6 is a view corresponding to a cross-section along line II-II' of FIG. 1.
FIG. 7 is a perspective view schematically showing a rechargeable battery according to another embodiment.
FIG. 8 is a view for explaining a vehicle including a rechargeable battery according to an embodiment.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this invention will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. In addition, it will also be understood that when a layer is referred to as being "between" two layers, it can be the only layer between the two layers, or one or more intervening layers may also be present. Like reference numerals refer to like elements throughout.

In addition, in case that used in this specification, "comprise," "include," "comprising," and/or "including" specify the presence of the mentioned shapes, numbers, steps, operations, members, elements and/or groups thereof, and do not exclude the presence or addition of one or more other shapes, numbers, operations, members, elements and/or groups.

Reference to two comparison objects being 'identical' means 'substantially identical.' Therefore, substantial identity may include cases having deviations considered to be at a low level in the art, for instance, deviations within 5%. In addition, that a parameter is uniform in a predetermined region may mean that it is uniform from an average perspective.

Throughout the specification, unless specifically stated to the contrary, each component may be singular or plural.

That any configuration is disposed on the "upper (or lower)" of a component or "on (or under)" a component means not only that any configuration is disposed in contact with the upper surface (or lower surface) of the component, but also that another configuration may be interposed between the component and any configuration disposed on (or under) the component.

Also, in case that a component is described as being "connected to" or "coupled to" another component, the components may be directly connected or coupled to each other, but it should be understood that other components may be "interposed" between each component, or each component may be "connected," "coupled," or "attached " through another component.

As used herein, the term "and/or" includes any and all combinations of one or more of the associated listed items. Also, in case that describing embodiments of the present invention, the use of "may" refers to "one or more embodiments of the present invention." Expressions such as "one or more" and "one or more" before a list of elements modify the entire list of elements and do not modify individual elements of the list.

Throughout the specification, in case that referring to "A and/or B," this means A, B, or A and B unless there is a special contrary description, and in case that referring to "C to D," this means C or more and D or less unless there is a special contrary description.

In case that phrases such as "at least one of A, B and C," "at least one of A, B or C," "at least one selected from the group A, B and C," or "at least one selected from A, B and C" are used to specify a list of elements A, B and C, the phrase may refer to any and all suitable combinations.

The term "use" may be considered synonymous with the term "utilize." As used herein, "substantially," "about," and similar terms are used as terms of approximation rather than terms of degree, and are intended to account for inherent variations in measured or calculated values that would be recognized by a person of ordinary skill in the art.

In this specification, terms such as first, second, third, and the like may be used to describe various elements, components, regions, layers and/or sections, but these elements, components, regions, layers and/or sections should not be limited by these terms. These terms are used to distinguish one element, component, region, layer or section from another element, component, region, layer or section. Therefore, a first element, component, region, layer or section discussed below may be named a second element, component, region, layer or section without departing from the teachings of the embodiments.

Spatial relative terms such as "beneath," "below," "lower," "above," "upper," and the like may be used herein for ease of description to describe the relationship of one element or feature with another element(s) or feature(s) as shown in the drawings. It will be understood that spatially relative positions are intended to encompass different orientations of the device in use or operation in addition to the orientations depicted in the figures. For instance, if the device in the drawings is flipped, elements described as "below" or "beneath" other elements would be understood as "above" or "on top of" other elements. Thus, the term "below" may encompass both upward and downward directions.

The terminology used herein is for describing embodiments of the present invention and is not intended to limit the present invention.

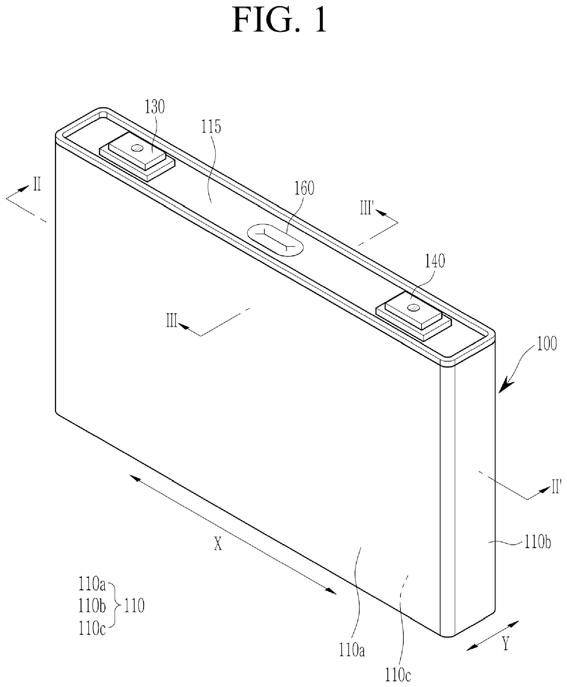

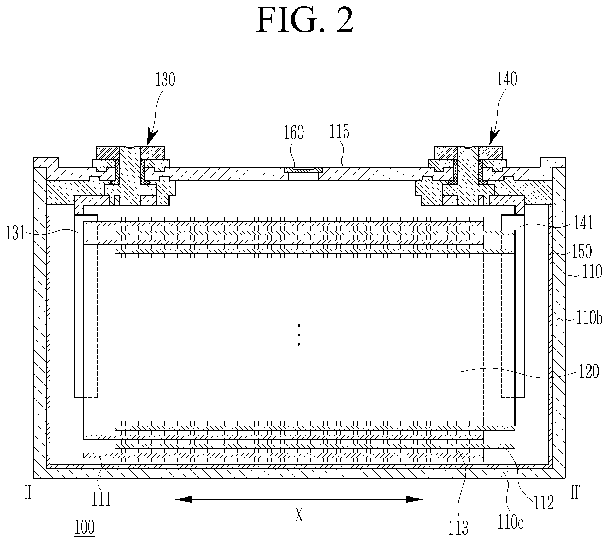

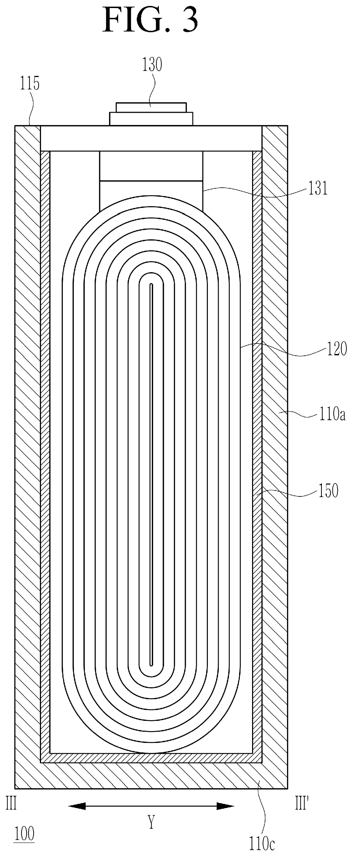

FIG. 1 is a perspective view schematically showing a rechargeable battery according to an embodiment. FIG. 2 is a cross-sectional view taken along line II-II' of FIG. 1. FIG. 3 is a cross-sectional view taken along line III-III' of FIG. 1.

Referring to FIGS. 1 to 3, a rechargeable battery 100 according to an embodiment may include an electrode assembly 120, a first terminal 130, a second terminal 140, a case 110, a cap plate 115, and a buffer layer 150.

The electrode assembly 120 may be formed by winding or stacking a laminate of a first electrode plate 111, a separator 113, and a second electrode plate 112 formed in thin plate or film shapes. For example, as illustrated in FIGS. 2 and 3, the electrode assembly 120 may be a winding type with a winding axis that is parallel to the longitudinal direction (e.g., along the X-axis) of the case 110. In another example, the electrode assembly 120 may be a stack type. In yet another example, the electrode assembly 120 may be a Z-stack electrode assembly in which positive and negative electrode plates are inserted on both sides of a separator bent in a Z-stack. In addition, the electrode assembly 120 may be formed by stacking one or more electrode assemblies so that their long sides are adjacent to each other and accommodated inside the case. For example, the first electrode plate of the electrode assembly 120 may serve as a negative electrode, and the second electrode plate may serve as a positive electrode (e.g., the reverse is also possible).

The first electrode plate may be formed by applying a first electrode active material such as graphite or carbon to a first electrode current collector formed of a metal foil such as copper, copper alloy, nickel, or nickel alloy, and may include a first electrode tab (or first uncoated portion) which is a region where the first electrode active material is not applied. The first electrode tab may serve as a passage for current flow between the first electrode plate and the first current collector. In some instances, the first electrode tab may be formed by cutting to protrude to one side in advance when manufacturing the first electrode plate, and may protrude further to one side than the separator without separate cutting.

The first electrode active material may be a negative electrode active material, and the negative electrode active material includes a material capable of reversibly intercalating/deintercalating lithium ions, lithium metal, an alloy of lithium metal, a material capable of being doped with and dedoped of lithium, or a transition metal oxide.

The material capable of reversibly intercalating/deintercalating lithium ions may be a carbon negative electrode active material, for instance, crystalline carbon, amorphous carbon, or a combination thereof. Examples of the crystalline carbon include graphite such as amorphous, plate-like, flake, spherical, or fibrous forms of natural graphite or artificial graphite, and examples of the amorphous carbon include soft carbon or hard carbon, mesophase pitch carbides, calcined coke, and the like.

The lithium metal alloy may be an alloy of lithium and a metal selected from Na, K, Rb, Cs, Fr, Be, Mg, Ca, Sr, Si, Sb, Pb, In, Zn, Ba, Ra, Ge, Al, and Sn may be used.

As the material capable of doping and dedoping lithium, a Si negative electrode active material or a Sn negative electrode active material may be used. The Si negative electrode active material may be silicon, a silicon-carbon composite, SiOₓ (0 < x < 2), a Si-Q alloy (where Q is selected from alkali metals, alkaline earth metals, Group 13 elements, Group 14 elements (excluding Si), Group 15 elements, Group 16 elements, transition metals, rare earth elements, and combinations thereof), or combinations thereof. The Sn negative electrode active material may be Sn, SnO₂, a Sn alloy, or combinations thereof.

The silicon-carbon composite may be a composite of silicon and amorphous carbon. According to an embodiment, the silicon-carbon composite may be in the form of silicon particles and amorphous carbon coated on the surface of the silicon particles. For instance, it may include secondary particles (cores) assembled from silicon primary particles and an amorphous carbon coating layer (shell) positioned on the surface of the secondary particles. The amorphous carbon may also be positioned between the silicon primary particles, so that, for instance, the silicon primary particles may be coated with amorphous carbon. The secondary particles may be present dispersed in an amorphous carbon matrix.

The silicon-carbon composite may further include crystalline carbon. For instance, the silicon-carbon composite may include a core containing crystalline carbon and silicon particles and an amorphous carbon coating layer positioned on the surface of the core.

The Si negative electrode active material or Sn negative electrode active material may be used in combination with a carbon negative electrode active material.

The first electrode plate may serve as a negative electrode, and the first electrode plate includes a first electrode current collector (negative electrode current collector) and a first active material layer (negative electrode active material layer) positioned on the first electrode current collector. The first active material layer includes a first electrode active material (negative electrode active material) and may further include a binder and/or a conductive material.

For instance, the first active material layer may include 90 wt% to 99 wt% of negative electrode active material, 0.5 wt% to 5 wt% of binder, and 0 wt% to 5 wt% of conductive material, relative to 100 wt% of the first active material layer.

The binder serves to bind negative electrode active material particles to each other well and also to bind the negative electrode active material to the current collector well. As the binder, a non-aqueous binder, an aqueous binder, a dry binder, or a combination thereof may be used.

Examples of the non-aqueous binder may include polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamideimide, polyimide, or combinations thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluorine rubber, polyethylene oxide, polyvinylpyrrolidone, polyepichlorohydrin, polyphosphazene, poly(meth)acrylonitrile, ethylene propylene diene copolymer, polyvinylpyridine, chlorosulfonated polyethylene, latex, polyester resin, (meth)acrylic resin, phenol resin, epoxy resin, polyvinyl alcohol, and combinations thereof.

In case that an aqueous binder is used as the negative electrode binder, it may further include a cellulose compound that may impart viscosity. As the cellulose compound, one or more of carboxymethyl cellulose, hydroxypropylmethyl cellulose, methyl cellulose, or alkali metal salts thereof may be used in combination. As the alkali metal, Na, K, or Li may be used.

The dry binder may be a polymer material capable of fibrillation, and may be, for instance, polytetrafluoroethylene, polyvinylidene fluoride, polyvinylidene fluoride-hexafluoropropylene copolymer, polyethylene oxide, or combinations thereof.

The conductive material is used to impart conductivity to the electrode, and any electrically conductive material that does not cause chemical changes in the battery may be used. Specific examples may include carbon materials such as natural graphite, artificial graphite, carbon black, acetylene black, Ketjen black, carbon fiber, carbon nanofiber, and carbon nanotube; metal materials in the form of metal powder or metal fiber including copper, nickel, aluminum, silver, and the like; conductive polymers such as polyphenylene derivatives; or mixtures thereof.

As the negative electrode current collector, one selected from copper foil, nickel foil, stainless steel foil, titanium foil, nickel foam, copper foam, a polymer substrate coated with a conductive metal, and combinations thereof may be used.

The second electrode plate may be formed by applying a second electrode active material such as a transition metal oxide to a second electrode current collector formed of a metal foil such as aluminum or aluminum alloy, and may include a second electrode tab (or second uncoated portion) which is a region where the second electrode active material is not applied. The second electrode tab may serve as a passage for current flow between the second electrode plate and the second current collector. In some instances, the second electrode tab may be formed by cutting to protrude to the other side in advance when manufacturing the second electrode plate, and may protrude further to the other side than the separator without separate cutting.

The second electrode active material may be a positive electrode active material, and as the positive electrode active material, a compound capable of reversible intercalation and deintercalation of lithium (lithiated intercalation compound) may be used. Specifically, one or more of composite oxides of lithium and metals selected from cobalt, manganese, nickel, and combinations thereof may be used.

The composite oxide may be a lithium transition metal composite oxide, and specific examples include lithium nickel oxide, lithium cobalt oxide, lithium manganese oxide, lithium iron phosphate compound, cobalt-free nickel-manganese oxide, or combinations thereof.

As an embodiment, a compound represented by any one of the following chemical formulas may be used: LiₐA_{1-b}X_{b}O_{2-c}D'_{c}(0.90≤a≤1.8, 0≤b≤0.5, 0≤c≤0.05); LiₐMn_{2-b}X_{b}O_{4-c}D'_{c}(0.90≤a≤1.8, 0≤b≤0.5, 0≤c≤0.05); LiₐNi_{1-b-c}CosX_{c}O_{2-α}D'_{α}(0.90≤a≤1.8, 0≤b≤0.5, 0≤c≤0.5, 0<α<2); LiₐNi_{1-b-c}Mn_{b}X_{c}O_{2-α}D'_{α}(0.90≤a≤1.8, 0≤b≤0.5, 0≤c≤0.5, 0<α<2); LiₐNi_{b}Co_{c}L¹_{d}GeO₂(0.90≤a≤1.8, 0≤b≤0.9, 0≤c≤0.5, 0≤d≤0.5, 0≤e≤0.1); LiₐNiG_{b}O₂(0.90≤a≤1.8, 0.001≤b≤0.1); LiₐCoG_{b}O₂(0.90≤a≤1.8, 0.001≤b≤0.1); LiₐMn_{1-b}G_{b}O₂(0.90≤a≤1.8, 0.001≤b≤0.1); LiₐMn₂G_{b}O₄(0.90≤a≤1.8, 0.001≤b≤0.1); LiₐMn_{1-g}G_{g}PO₄(0.90≤a≤1.8, 0≤g≤0.5); Li_{(3-f)}Fe₂(PO4)₃(0≤f≤2); LiₐFePO₄(0.90≤a≤1.8).

In the chemical formulas, A may be Ni, Co, Mn, or combinations thereof; X may be Al, Ni, Co, Mn, Cr, Fe, Mg, Sr, V, a rare earth element, or combinations thereof; D' may be O, F, S, P, or combinations thereof; G may be Al, Cr, Mn, Fe, Mg, La, Ce, Sr, V, or combinations thereof; and L¹ may be Mn, Al, or combinations thereof.

As an embodiment, the positive electrode active material may be a high-nickel positive electrode active material in which the nickel content relative to 100 mol% of metals excluding lithium in the lithium transition metal composite oxide is 80 mol% or more, 85 mol% or more, 90 mol% or more, 91 mol% or more, or 94 mol% or more, and 99 mol% or less. The high-nickel positive electrode active material can achieve high capacity and may be applied to high-capacity, high-density lithium secondary batteries.

The second electrode plate may serve as a positive electrode, and the second electrode plate may include a second electrode current collector (current collector) and a second active material layer (positive electrode active material layer) formed on the second electrode current collector. The second active material layer includes a second electrode active material (positive electrode active material) and may further include a binder and/or a conductive material. As an embodiment, the second electrode plate may further include an additive that may serve as a sacrificial positive electrode.

The content of the second electrode active material may be 90 wt% to 99.5 wt% relative to 100 wt% of the second active material layer, and the content of the binder and the conductive material may be 0.5 wt% to 5 wt% each relative to 100 wt% of the second active material layer.

The binder serves to bind positive electrode active material particles to each other well and also to bind the positive electrode active material to the current collector well. Representative examples of the binder may include polyvinyl alcohol, carboxymethyl cellulose, hydroxypropyl cellulose, diacetyl cellulose, polyvinyl chloride, carboxylated polyvinyl chloride, polyvinyl fluoride, polymers containing ethylene oxide, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, nylon, and the like.

The conductive material is used to impart conductivity to the electrode, and any electrically conductive material that does not cause chemical changes in the battery may be used. Examples of the conductive material may include carbon materials such as natural graphite, artificial graphite, carbon black, acetylene black, Ketjen black, carbon fiber, carbon nanofiber, and carbon nanotube; metal materials containing copper, nickel, aluminum, silver, and the like in the form of metal powder or metal fiber; conductive polymers such as polyphenylene derivatives; or mixtures thereof.

Al may be used as the current collector.

The separator may be disposed between the first electrode plate and the second electrode plate to prevent short circuits and enable movement of lithium ions. The separator may be polyethylene, polypropylene, polyvinylidene fluoride, or a multilayer film of two or more layers thereof, and of course, mixed multilayer films such as a polyethylene/polypropylene two-layer separator, a polyethylene/polypropylene/polyethylene three-layer separator, and a polypropylene/polyethylene/polypropylene three-layer separator may be used.

The separator may include a porous substrate and a coating layer including organic materials, inorganic materials, or combinations thereof positioned on one or both surfaces of the porous substrate.

The porous substrate may be a polymer film formed of any one polymer selected from polyolefins such as polyethylene and polypropylene, polyesters such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenylene oxide, cyclic olefin copolymer, polyphenylene sulfide, polyethylene naphthalate, glass fiber, Teflon, and polytetrafluoroethylene, or a copolymer or mixture of two or more thereof.

The organic material may include a polyvinylidene fluoride polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof.

The organic and inorganic materials may exist mixed in one coating layer or in the form of a coating layer containing organic materials and a coating layer containing inorganic materials stacked together.

The case 110 is provided with a space for accommodating the electrode assembly 120 therein. The electrode assembly 120 is inserted into the case 110 through one opened surface of the case 110, and the cap plate 115 is coupled to the opened surface to seal the interior of the case 110.

The case 110 may include a bottom surface 110c facing the cap plate 115 and side portions 110a and 110b connected to the bottom surface 110c. The side portions 110a and 110b may include a pair of long side portions 110a connected to the long sides of the bottom surface 110c and a pair of short side portions 110b connected to the short sides of the bottom surface 110c. The long sides of the bottom surface 110c may be parallel to the longitudinal direction (e.g., along the X-axis) of the case 110, and the short sides of the bottom surface 110c may be parallel to the thickness direction (e.g., along the Y-axis) which intersects the longitudinal direction (e.g., along the X-axis) of the case 110. The pair of long side portions 110a may face each other in the thickness direction (e.g., in the Y-axis), and the pair of short side portions 110b may face each other in the longitudinal direction (e.g., in the X-axis).

For example, the case 110 may be a rectangular parallelepiped, and the bottom surface 110c, the long side portions 110a, and the short side portions 110b may each have a rectangular shape. In another example, the case 110 may be configured in various shapes, e.g., circular and pouch types. The case 110 may be formed of a conductive metal such as aluminum, aluminum alloy, or nickel-plated steel.

The cap plate 115 may seal the case 110 while allowing current generated in the electrode assembly 120 to flow to an external device. In an embodiment, a vent part 160 may be further disposed on the cap plate 115. The vent part 160 may allow internal gas to be discharged in case that the internal pressure of the rechargeable battery 100 exceeds a set pressure, thus preventing the rechargeable battery 100 from exploding due to overcharge, overdischarge, external impact, and the like.

The first terminal 130 and the second terminal 140 may be contact points connected to an external circuit of the rechargeable battery 100. The first terminal 130 may be electrically connected to the first electrode plate through a first current collector 131 inside the rechargeable battery 100. The second terminal 140 may be electrically connected to the second electrode plate through a second current collector 141 inside the rechargeable battery 100.

The first terminal 130 and the second terminal 140 may be formed on both sides of the cap plate 115. For example, referring to FIG. 1, the first terminal 130 and the second terminal 140 may be formed on the cap plate 115. In another example, the first terminal 130 and the second terminal 140 may be positioned on a pair of different side portions 110a and 110b which face each other, e.g., may be positioned on the short side portions 110b.

The first terminal 130 and the second terminal 140 may be formed of metal. For instance, the first terminal 130 may be made of copper or copper alloy. The second terminal 140 may be made of aluminum or aluminum alloy.

The first current collector 131 and the second current collector 141 may be formed of metal. For instance, the first current collector 131 may be made of copper or copper alloy. The second current collector 141 may be made of aluminum or aluminum alloy.

Referring to FIGS. 2 and 3, the rechargeable battery 100 according to an embodiment may further include the buffer layer 150 positioned inside the case 110. The buffer layer 150 may be disposed between the case 110 and the electrode assembly 120, and may be positioned on (e.g., directly on) the inner surface of the case 110. For example, referring to FIGS. 2 and 3, the buffer layer 150 may (e.g., continuously) cover the entire inner surface of the case 110. For example, FIGS. 2 and 3 show the buffer layer 150 covering entire inner surfaces of the side portions 110a and 110b and the bottom surface 110c. In another example, the buffer layer 150 may cover only a part of the inner surface of the case 110.

The thickness of the buffer layer 150 may be about 10 mm, e.g., about 8 mm or less. Therefore, sufficient space for placing the electrode assembly 120 inside the case 110 may be secured. The buffer layer 150 may be applied with a constant thickness inside the case 110. The thickness of the buffer layer 150 may be the thickness in a direction perpendicular to each inner surface of the case 110.

The buffer layer 150 may include a silicone rubber material. The buffer layer 150 may be a polymer composed of siloxane (-Si-O-Si-) bonds. The buffer layer 150 has a chemical structure of (R₂SiO)ₙ, where R may be substituted with methyl (-CH₃), phenyl (-C₆H₅), vinyl (-CH=CH₂), or other functional groups.

The buffer layer 150 has excellent heat resistance, so the decomposition temperature of the buffer layer 150 may be higher than the heat generation temperature inside the rechargeable battery 100. The decomposition temperature of the buffer layer 150 may be about 200 °C or higher, e.g., about 250 °C. Even in case that heat generation occurs inside the rechargeable battery 100, heat transfer may be delayed by the buffer layer 150 having thermal insulation properties. Therefore, thermal runaway of the rechargeable battery 100 may be prevented.

In addition, siloxane bonds have a freely rotating bonding structure, so the buffer layer 150 may have excellent elasticity. Therefore, the rechargeable battery 100 may maintain stability by the buffer layer 150 even against external impact.

That is, thermal and physical stability of the rechargeable battery 100 may be secured by applying the buffer layer 150 to the case 110 made of a metal such as aluminum (Al).

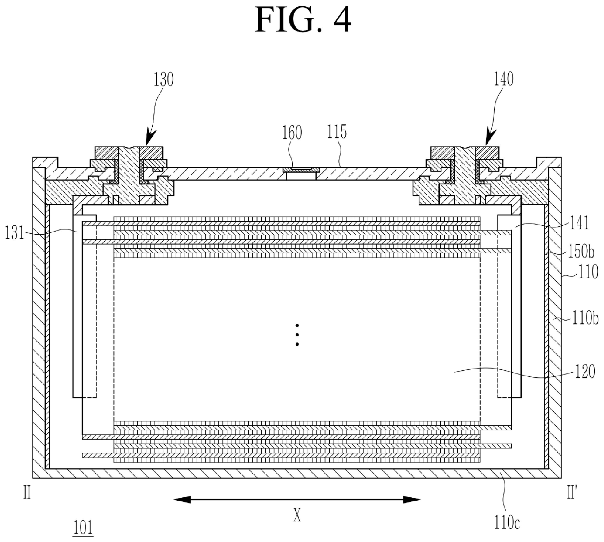

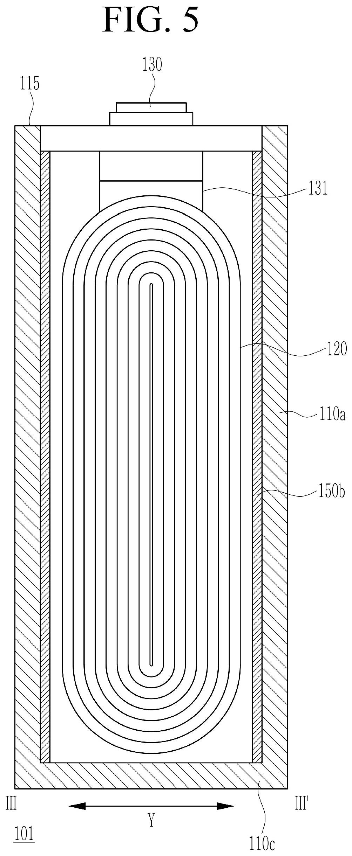

FIGS. 4 and 5 show a rechargeable battery according to another embodiment. FIG. 4 is a view corresponding to a cross-section taken along line II-II' of FIG. 1, and FIG. 5 is a view corresponding to a cross-section taken along line III-III' of FIG. 1.

Referring to FIGS. 4 and 5, in the rechargeable battery 101 according to another embodiment, a buffer layer 150b may cover a part (e.g., only a part) of the inner surface of the case 110. Referring to FIGS. 4 and 5, the buffer layer 150b may be positioned on the side portions 110a and 110b of the case 110, and the buffer layer 150 may not be positioned on the bottom surface 110c.

Even in case that the buffer layer 150 covers only a part of the inner surface of the case 110 rather than the entire inner surface, thermal insulation properties and buffering properties may be maintained. In particular, the buffer layer 150b may be positioned on the long side portions 110a having the largest area among the inner surfaces, so that the rechargeable battery 101 may maintain thermal insulation and buffering properties. In addition, more internal space may be secured by allowing the buffer layer 150 to cover only a part of the inner surface of the case 110.

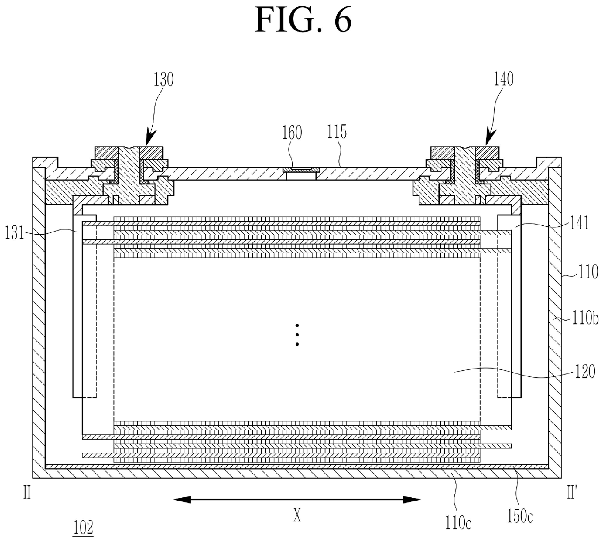

FIG. 6 is a cross-sectional view showing a rechargeable battery according to another embodiment. FIG. 6 is a view corresponding to a cross-section taken along line II-II' of FIG. 1.

Referring to FIG. 6, in the rechargeable battery 102 according to another embodiment, a buffer layer 150c may cover a part (e.g., only a part) of the inner surface of the case 110. For example, the buffer layer 150c may cover only a part of the side portions 110a and 110b. Referring to FIG. 6, the buffer layer 150c may be positioned on the long side portions 110a (see FIG. 1) and the bottom surface 110c of the case 110, and may not be positioned on the short side portions 110b. Although the buffer layer 150c positioned on the long side portions 110a is not shown in FIG. 6, it may be positioned on the long side portions 110a and the bottom surface 110c as shown in FIG. 3.

Even in case that the buffer layer 150c covers only a part of the inner surface of the case 110 rather than the entire inner surface, thermal insulation properties and buffering properties may be maintained. In particular, the buffer layer 150b may be positioned on the long side portions 110a having the largest area among the inner surfaces, so that the rechargeable battery 102 may maintain thermal insulation and buffering properties. In addition, more internal space may be secured by allowing the buffer layer 150 to cover only a part of the inner surface of the case 110.

For example, the buffer layer 150b may be positioned only on the pair of long side portions 110a and may not be positioned on the short side portions 110b and the bottom surface 110c.

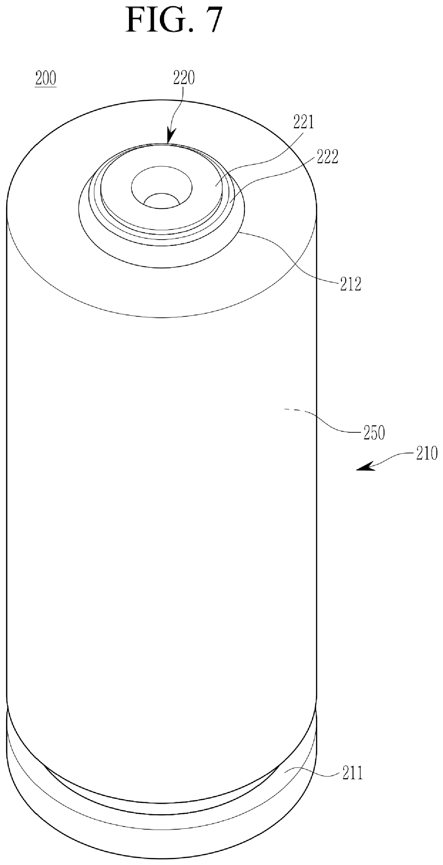

FIG. 7 is a perspective view schematically showing a rechargeable battery according to another embodiment of the present invention.

Referring to FIG. 7, a rechargeable battery 200 according to this embodiment may include a case 210 and a terminal part 220 positioned on a terminal side of the case 210.

The case 210 may be cylindrical and may have an internal space. An electrode assembly may be accommodated in the internal space of the case 210. A beading part 211 may be positioned on a side surface of the case 210. The beading part 211 may be a part deformed concavely toward an inner side of the case 210. A cap assembly may be positioned on the other side of the case 210 opposite to the terminal part 220, and an edge of the cap assembly may be fixed by the beading part 211.

A terminal hole 212 may be positioned on a stepped side of the case 210, and the terminal part 220 may be positioned in the terminal hole 212 and may be a part protruding upward from the terminal side of the case 210.

The terminal part 220 is a part which contacts an external circuit, and a heat dissipation coating part is a region adjacent to the terminal part 220 where the external circuit does not contact. The terminal part 220 may include a terminal 221 and an insulator 222, and the insulator 222 may be positioned between the terminal 221 and the case 210 to insulate the terminal 221 and the case 210. The terminal part 220 may be connected to a positive electrode of the electrode assembly to function as a positive terminal, and the case 210 may be connected to a negative electrode of the electrode assembly to function as a negative terminal.

The rechargeable battery 200 according to this embodiment may further include a buffer layer 250 positioned inside the case 210. The buffer layer 250 may be disposed between the case 210 and the electrode assembly and may be positioned on an inner surface of the case 210. The buffer layer 250 may cover the entire inner surface of the case 210, and depending on the embodiment, may cover only a part of the inner surface. The configuration of the buffer layer 250 according to this embodiment may be the same as the configuration of the buffer layer described with reference to FIGS. 1 to 6.

The rechargeable battery 200 according to this embodiment is a cylindrical rechargeable battery and may be classified according to the diameter and height of the case 210. For instance, the rechargeable battery 200 according to this embodiment may be a 4680 rechargeable battery (diameter 46mm, height 80mm), a 4695 rechargeable battery (diameter 46mm, height 95mm), a 46100 rechargeable battery (diameter 46mm, height 100mm), or a 46120 rechargeable battery (diameter 46mm, height 120mm).

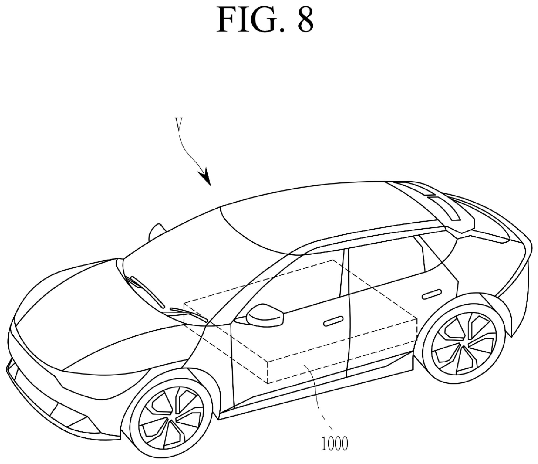

The battery according to the above-described embodiment may be used to manufacture a battery pack. A battery pack 1000 (FIG. 8) according to an embodiment may include an assembly in which rechargeable batteries 100 and 200 according to an embodiment are electrically connected and a pack housing accommodating the assembly. The battery pack may be mounted in a vehicle. The vehicle may be, for instance, an electric vehicle, a hybrid vehicle, or a plug-in hybrid vehicle. The vehicle may include a four-wheel vehicle or a two-wheel vehicle.

FIG. 8 is a view for explaining a vehicle V including the battery pack 1000 according to an embodiment. Referring to FIG. 8, the vehicle V according to an embodiment may include the battery pack 1000 according to an embodiment and also may include rechargeable batteries 100 and 200 according to an embodiment. The vehicle operates by receiving power from the battery pack.

By way of summation and review, embodiments of the present invention are intended to provide a rechargeable battery for preventing thermal runaway of the rechargeable battery and improving stability against external impact.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the spirit and scope of the present invention as set forth in the following claims.

## Claims

1. A rechargeable battery (100, 101, 102, 200), comprising:
an electrode assembly (120);
a case (110, 210) accommodating the electrode assembly (120), the case (110, 210) having one open surface;
a cap plate (115) coupled to the one open surface of the case (110, 210); and
a buffer layer (150, 250) inside the case (110, 210), the buffer layer (150, 250) comprising a silicone rubber material.

2. The rechargeable battery (100, 101, 102, 200) as claimed in claim 1, wherein the buffer layer (150, 250) is between the case (110, 210) and the electrode assembly (120).

3. The rechargeable battery (100, 101, 102, 200) as claimed in claim 2, wherein the buffer layer (150, 250) covers at least a part of an inner surface of the case (110, 210); preferably wherein
the case (110, 210) comprises a bottom surface (110c) facing the cap plate (115) and side portions (110a, 110b) connected to the bottom surface (110c); and
the side portions (110a, 110b) comprise a pair of long side portions (110a) connected to long sides of the bottom surface (110c) and a pair of short side portions (110b) connected to short sides of the bottom surface (110c).

4. The rechargeable battery (100, 101, 102, 200) as claimed in claim 3, wherein the buffer layer (150, 250) is positioned on the long side portions (110a).

5. The rechargeable battery (100, 101, 102, 200) as claimed in claim 4, wherein the buffer layer (150, 250) is positioned on the short side portions (110b).

6. The rechargeable battery (100, 101, 102, 200) as claimed in claim 4, wherein the buffer layer (150, 250) is positioned on the bottom surface (110c).

7. The rechargeable battery (100, 101, 102, 200) as claimed in claim 3, wherein the buffer layer (150, 250) is positioned on entire side portions (110a, 110b) of the case (110, 210).

8. The rechargeable battery (100, 101, 102, 200) as claimed in claim 3, wherein the buffer layer (150, 250) is positioned on entire side portions (110a, 110b) and the bottom surface (110c) of the case (110, 210).

9. The rechargeable battery (100, 101, 102, 200) as claimed in any one of the preceding claims, wherein the buffer layer (150, 250) is a polymer composed of siloxane bonds and/or wherein the case (110, 210) comprises aluminum.

10. The rechargeable battery (100, 101, 102, 200) as claimed in any one of the preceding claims, wherein a thickness of the buffer layer (150, 250) is about 10 mm or less, preferably wherein the thickness of the buffer layer (150, 250) is about 8 mm or less.

11. The rechargeable battery as claimed in any one of the preceding claims, wherein a decomposition temperature of the buffer layer (150, 250) is about 200 °C or higher, preferably wherein the decomposition temperature of the buffer layer (150, 250) is about 250 °C or higher.

12. The rechargeable battery (100, 101, 102, 200) as claimed in any one of the preceding claims, wherein:
the electrode assembly (120) comprises a positive electrode comprising a positive electrode active material, the positive electrode active material comprising lithium nickel composite oxide, and
the lithium nickel composite oxide of the positive electrode active material has a nickel content of 80 mol% or more and 99 mol% or less relative to metals excluding lithium in the lithium nickel composite oxide; preferably wherein
the lithium nickel composite oxide of the positive electrode active material has a nickel content of 90 mol% or more and 99 mol% or less relative to metals excluding lithium in the lithium nickel composite oxide.

13. A rechargeable battery module comprising the rechargeable battery (100, 101, 102, 200) as claimed in any one of claims 1 to 12.

14. A rechargeable battery pack comprising the rechargeable battery (100, 101, 102, 200) as claimed in any one of claims 1 to 12.

15. A vehicle comprising the rechargeable battery (100, 101, 102, 200) as claimed in any one of claims 1 to 12.
